# EUROPÄISCHE PATENTSCHRIFT

(11) **EP 1 481 164 B1**
(45) Veröffentlichungstag und Bekanntmachung des Hinweises auf die Patenterteilung: **20.08.2008**
(21) Anmeldenummer: 03706483.9
(22) Anmeldetag: 12.02.2003
(51) Int. Cl.: F03G 7/06

(54) **VORRICHTUNG ZUM ANSTEUERN EINES ELEMENTS AUS EINER FORMGEDÄCHTNISLEGIERUNG**
DEVICE FOR CONTROLLING AN ELEMENT MADE OF A SHAPE-MEMORY ALLOY
DISPOSITIF DE COMMANDE D'UN ELEMENT EN ALLIAGE A MEMOIRE DE FORME

(30) Priorität: 26.02.2002 DE 10208213
(43) Veröffentlichungstag der Anmeldung: 01.12.2004
(73) Patentinhaber: BSH Bosch und Siemens Hausgeräte GmbH, 81739 München (DE)
(72) Erfinder: JERG, Helmut, D-89537 Giengen (DE); EIERMANN, Rüdiger, D-89428 Sygenstein (DE); KAUTZ, Stefan, D-91094 Langensendelbach (DE); DIRNBERGER, Albert, D-92431 Neunburg vorm Wald (DE)
(86) Internationale Anmeldenummer: PCT/EP2003/001377
(87) Internationale Veröffentlichungsnummer: WO 2003/072939

(56) Entgegenhaltungen:
- DE-A- 19 933 956
- DE-A- 19 947 324
- US-A- 4 884 780
- US-A- 6 016 096

## Beschreibung

Die Erfindung betrifft eine Vorrichtung zum Ansteuern eines Elements aus einer Formgedächtnislegierung.

Elemente aus Formgedächtnislegierungen, (sogen. Memory-Metall) haben bekanntlich die Eigenschaft ihre Form bei Erwärmung zu verändern und beim Erkalten die Ursprungsform wieder einzunehmen.

Aus der DE 199 47 324 A1 ist ein Umsteuereinrichtung einer Haushalt-Geschirrspülmaschine bekannt, deren Ventilkörper mittels einer erwärmten Druckfeder aus einer Formgedächtnislegierung in eine Schließstellung gegen die Kraft einer Rückstellfeder gebracht wird und durch diese Rückstellfeder in eine Öffnungsstellung. Die Druckfeder aus einer Formgedächtnislegierung wird mittels eines Heizelementes, vorzugsweise mittels eines PTC-Elementes (Positive Temperature Component), erwärmt. Hierzu wird ein gesonderter Steuerstromkreis benötigt.

Es sind allerdings auch Anwendungen bekannt, bei denen ein Element aus Formgedächtnislegierung durch Durchleiten von elektrischem Strom erwärmt wird. Hierzu wird ein gesonderter Steuerstromkreis benötigt.

Die vorbekannten Anordnungen sind kompliziert und teuer.

Aus der US-A-4 884 780 ist eine Vorrichtung zur Betätigung eines Ventils oder einer Klappe, bspw. einer Kfz-Klimatisierungseinrichtung bekannt. Diese Vorrichtung gemäß der US-A-4 884 780 weist zum Ansteuern eines Elements aus einer Formgedächtnislegierung ein PTC-Element im Stromkreis für das Element aus einer Formgedächtnislegierung auf, dem das Element aus einer Formgedächtnislegierung in Serie vorgeschaltet ist.

Der Erfindung liegt daher die Aufgabe zugrunde, eine einfache und kostengünstige Vorrichtung zum Ansteuern eines Elements aus einer Formgedächtnislegierung zu schaffen das in einer Geschirrspülmaschine verwendet werden kann.

Diese Aufgabe wird durch die erfindungsgemäße Vorrichtung nach Patentanspruch 1 gelöst.

Bei der erfindungsgemäßen Vorrichtung ist zum Ansteuern eines Elements aus einer Formgedächtnislegierung ein PTC-Element im Stromkreis für das Element aus einer Formgedächtnislegierung dem Element aus einer Formgedächtnislegierung in Serie vorgeschaltet.

PTC-Elemente weisen eine besondere Charakteristik auf, nämlich bei einem PTC-Element fließt über eine sehr kurze Zeitdauer (etwa 100 bis 500 Millisekunden) ein hoher Strom (etwa 3 bis 6 Ampere), durch den in der erfindungsgemäßen Vorrichtung das Element aus einer Formgedächtnislegierung sehr schnell erwärmt und dadurch eine entsprechende große und schnelle Veränderung seiner Form erreicht wird. Gleichzeitig kann natürlich auch die von dem üblicherweise als Heizelement verwendeten PTC-Elements erzeugte Wärme zur Erwärmung des Element aus einer Formgedächtnislegierung beitragen. Somit wird ein ohnehin vorhandenes Heizelement, das PTC-Element, kostengünstig für einen Zusatznutzen verwendet. Ferner kann ein gesonderter Steuerstromkreis eingespart werden.

Dabei ist das Element aus einer Formgedächtnislegierung eine Schießfeder eines Ventils, das in einer Geschirrspülmaschine verwendet wird.

Mit der Erfindung ist auf einfache Art und Weise eine einfache und kostengünstige Vorrichtung zum Ansteuern eines Elements aus einer Formgedächtnisiegierung geschaffen.

## Patentansprüche

1. Vorrichtung zum Ansteuern eines Elements aus einer Formgedächtnislegierung, in einer Geschirrspülmaschine, wobei das Element aus einer Formgedächtnislegierung eine Schließfeder eines Ventils ist **dadurch gekennzeichnet** das in dass eine PTC-Element im Stromkreis für das Element aus einer Formgedächtnislegierung vorgesehen ist das, dem Element aus einer Formgedächtnislegierung in Serie vorgeschaltet ist.

## Claims

1. Device for controlling an element of a shape-memory alloy, in a dishwashing machine, wherein the element of a shape-memory alloy is a closing spring of a valve, **characterised in that** a PTC element is provided in the current circuit for the element of a shape-memory alloy and is connected in series upstream of the element of a shape-memory alloy.

## Revendications

1. Dispositif pour la commande d'un élément en alliage à mémoire de forme dans un lave-vaisselle, l'élément en alliage à mémoire de forme étant un ressort de fermeture d'une soupape, **caractérisé en ce qu'**un élément à coefficient positif de température est prévu dans le circuit pour l'élément en alliage à mémoire de forme, lequel est branché en série en amont de l'élément en alliage à mémoire de forme.
